(19) Europäisches Patentamt
European Patent Office
Office européen des brevets

(11) **EP 3 655 810 B1**

(12) **EUROPÄISCHE PATENTSCHRIFT**

(45) Veröffentlichungstag und Bekanntmachung des Hinweises auf die Patenterteilung:
**31.08.2022  Patentblatt 2022/35**

(21) Anmeldenummer: **18752689.2**

(22) Anmeldetag: **17.07.2018**

(51) Internationale Patentklassifikation (IPC):
**G02B 21/00** *(2006.01)*    **G02B 21/36** *(2006.01)*
**G06T 19/00** *(2011.01)*

(52) Gemeinsame Patentklassifikation (CPC):
**G02B 21/367; G02B 21/0032; G02B 21/0076**

(86) Internationale Anmeldenummer:
**PCT/EP2018/069444**

(87) Internationale Veröffentlichungsnummer:
**WO 2019/016238 (24.01.2019 Gazette 2019/04)**

(54) **LICHTBLATTMIKROSKOPISCHES VERFAHREN ZUR ERZEUGUNG EINES VOLUMENBILDES EINER PROBE UND LICHTBLATTMIKROSKOP**

LIGHT SHEET MICROSCOPY METHOD FOR GENERATING A VOLUME IMAGE OF A SAMPLE, AND LIGHT SHEET MICROSCOPE

PROCÉDÉ DE MICROSCOPIE À FEUILLE DE LUMIÈRE PERMETTANT DE PRODUIRE UNE IMAGE VOLUMIQUE D'UN ÉCHANTILLON ET MICROSCOPE À FEUILLE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2017  DE 102017116380**

(43) Veröffentlichungstag der Anmeldung:
**27.05.2020  Patentblatt 2020/22**

(73) Patentinhaber: **Leica Microsystems CMS GmbH 35578 Wetzlar (DE)**

(72) Erfinder: **SCHUMANN, Christian 35423 Lich (DE)**

(74) Vertreter: **Schaumburg und Partner Patentanwälte mbB Postfach 86 07 48 81634 München (DE)**

(56) Entgegenhaltungen:
**WO-A1-2010/012980     WO-A2-2005/024722
WO-A2-2015/109323     US-A1- 2007 038 691
US-A1- 2016 327 779**

**Beschreibung**

Die Erfindung betrifft ein lichtblattmikroskopisches Verfahren zur Erzeugung eines Volumenbildes einer Probe.

Konventionelle Lichtblattmikroskope weisen probenseitig zwei separate Objektive auf, von denen eines der Beleuchtung und das andere der Detektion dient. Über das Beleuchtungsobjektiv wird üblicherweise ein parallel zur optischen Achse des Beleuchtungsobjektivs ausgerichtetes Lichtblatt in die Probe fokussiert. Das von der Probe durch die Beleuchtung mit dem Lichtblatt erzeugte Fluoreszenzlicht wird dann von einem Detektionsobjektiv, dessen optische Achse rechtwinklig zur optischen Achse des Beleuchtungsobjektivs liegt, auf einen Detektor abgebildet. Für Anwendungen, in denen eine Abbildung der Probe mittels eines solchen mit zwei separaten Objektiven ausgestatteten Lichtblattmikroskops mangels Raum nicht möglich ist, wurde in der US 8 582 203 B2 eine optische Anordnung vorgeschlagen, die mit einem einzigen der Probe zugewandten Objektiv auskommt. Bei diesem Mikroskop wird das Lichtblatt derart in die Probe fokussiert, dass es zur optischen Achse des Objektivs schräg gestellt ist. Wegen dieser Schrägstellung wird eine solche optische Anordnung auch als Schiefebenenmikroskop (OPM: "oblique plane microscope") bezeichnet.

Die aus der vorgenannten Druckschrift US 8 582 203 bekannte optische Anordnung zur Lichtblattmikroskopie umfasst eine Beleuchtungsoptik, eine Transportoptik und eine Detektionsoptik, deren optische Achse gegenüber der optischen Achse der Transportoptik verkippt ist. Ein von der Beleuchtungsoptik erzeugtes Lichtblatt wird durch die Transportoptik in eine Probe abgebildet. Dadurch wird eine in der Probe liegende Schicht beleuchtet und zur Fluoreszenz angeregt. Das von der Probe ausgehende Detektionslicht wird durch die Transportoptik in einen Zwischenbildraum abgebildet, wodurch dort ein Zwischenbild der beleuchteten Schicht erzeugt wird. Dieses Zwischenbild wird zur Erzeugung eines Schichtbildes durch die Detektionsoptik auf einen Bildsensor, beispielweise einen CCD-Chip, abgebildet. Um einen Volumenbereich der Probe mit dem Lichtblatt abzutasten, sind die Detektionsoptik und/oder die Beleuchtungsoptik bewegbar ausgeführt.

Aus der US 8 619 237 B2 ist eine alternative Anordnung bekannt, die eine laterale Abtastung des Volumenbereichs mit Hilfe zweier Umlenkelemente ermöglicht, von denen eines dem Lichtblatt und das andere einer Abbildungsebene zugeordnet ist. Die beiden Umlenkelemente sind an einem Polygonspiegel ausgebildet und damit geometrisch miteinander gekoppelt.

Werden Schichtbilder mehrerer längs einer Abtastrichtung in der Probe aufeinanderfolgender Schichten zu einem Schichtbildstapel zusammengesetzt, so ergibt sich aufgrund der Verkippung der optischen Achse der Detektionsoptik gegenüber der optischen Achse der Transportoptik eine Scherung des Schichtbildstapel und damit ein verschertes Volumenbild des beleuchteten Probenbereichs.

Um mit einem Schiefebenenmikroskop aufgenommene Volumenbilddaten scherungsfrei darzustellen, ist eine Transformation der Volumenbilddaten notwendig, die gemeinhin als Entscherung bekannt ist. Diese Entscherung ist insbesondere dann notwendig, wenn eine Korrelation der schiefebenenmikroskopisch aufgenommenen Volumenbilddaten mit Bilddaten hergestellt werden soll, die mit anderen, z.B. konfokalmikroskopischen Methoden gewonnen werden.

Üblicherweise erfolgt eine solche Entscherung durch Anwenden einer geometrischen Transformation, insbesondere einer inversen Scherung, die auf die Koordinaten eines Zielbildraums angewendet wird. Diese ergibt die Koordinaten eines Bildpunktes in den Volumenbilddaten, welcher dann in den Zielbildraum an den zugeordneten Koordinaten übernommen wird. Da es sich bei den Volumenbilddaten um diskrete Bilddaten handelt, liegt in der Regel am rücktransformierten Koordinatenpunkt kein Bildpunkt. Darum ist es notwendig, die Bilddaten an diesem Koordinatenpunkt durch Interpolation zu ermitteln. Da dies für jeden Bildpunkt in dem Volumenbild durchgeführt werden muss, ist diese Methode numerisch aufwändig, insbesondere wenn viele Bildpunkte zu interpolieren sind und präzisere Interpolationsmethoden als z.B. eine multilineare Interpolation zum Einsatz kommen sollen. Ferner treten bei der Interpolation von Bildpunkten, insbesondere bei einer linearen Interpolation, unerwünschte Bildartefakte auf.

Aus der Druckschrift WO 2015/109323 A2 ist ein Verfahren nach dem Oberbegriff des Anspruchs 1 bekannt.

Ausgehend von dem genannten Stand der Technik ist es Aufgabe der Erfindung, ein lichtblattmikroskopisches Verfahren zur Erzeugung eines Volumenbildes einer Probe sowie ein Lichtblattmikroskop anzugeben, die eine effiziente und artefaktfreie Volumenbildgebung mit vergleichsweise geringem Aufwand ermöglichen.

Die Erfindung löst diese Aufgabe durch die Gegenstände der unabhängigen Ansprüche. Vorteilhafte Weiterbildungen sind in den abhängigen Ansprüchen sowie der folgenden Beschreibung angegeben.

Bei dem erfindungsgemäßen Verfahren wird in einem Zwischenbildraum durch eine Beleuchtungsoptik ein Lichtblatt erzeugt. Das Lichtblatt wird mit Hilfe einer Transportoptik in die Probe abgebildet, wobei sich das Lichtblatt längs einer Lichtausbreitungsrichtung und einer hierzu senkrechten Ausdehnungsrichtung erstreckt. Mit Hilfe des Lichtblattes werden mehrere längs einer Abtastrichtung aufeinanderfolgende Schichten der Probe beleuchtet, so dass ein Volumenbereich der Probe abgetastet wird, der im Wesentlichen die Form eines Parallelepipeds hat, das durch die Lichtausbreitungsrichtung, die Ausdehnungsrichtung und die Abtastrichtung aufgespannt ist. Die beleuchteten Schichten werden durch die Transportoptik jeweils als Zwischenbild in den Zwischenbild in den Zwischenbildraum abgebildet. Durch eine Detektionsoptik, deren optische Achse gegenüber der optischen Achse der Transportoptik um einen Kippwinkel verkippt ist, wird aus den Zwischenbildern der beleuchteten Schichten jeweils ein Schichtbild erzeugt. Es werden Volumenbilddaten erzeugt, die einen aus den Schichtbildern zusammengesetzten Schichtbildstapel darstellen, wobei die Relativpositionen der einzelnen Schichtbilder längs der Lichtausbreitungsrichtung aufgrund der Verkippung der optischen Achse der Detektionsoptik gegenüber der optischen Achse der Transportoptik gegenüber den Relativpositionen der beleuchteten Schichten längs der Lichtausbreitungsrichtung verändert sind, so dass der Schichtbildstapel gegenüber dem abgetasteten Volumenbereich um den Kippwinkel geschert ist.

Es werden erste Spektraldaten durch eine zweidimensionale erste Transformation eines durch die Scherung nicht verzerrten ersten Teils der Volumenbilddaten des Schichtbildstapels erzeugt, wobei die erste Transformation in ersten Bildkoordinaten längs der Ausdehnungsrichtung und in zweiten Bildkoordinaten längs der Abtastrichtung erfolgt. Auf einen durch die Scherung verzerrten zweiten Teil der Volumenbilddaten des Schichtbildstapels wird eine Entscheroperation angewendet. Durch die Ausdehnungsrichtung, die Abtastrichtung und eine zu den beiden vorgenannten Richtungen senkrechte dritte Richtung wird ein Zielbildraum definiert. In dem Zielbildraum wird aus den ersten Spektraldaten und dem durch die Entscheroperation entscherten zweiten Teil der Volumenbilddaten das Volumenbild erzeugt. Das resultierende Volumenbild bildet dabei eine im Wesentlichen unverscherte Darstellung des Volumenbereichs der Probe.

Der Schichtbildstapel ist gegenüber dem Volumenbereich um den Kippwinkel in der Weise geschert, dass die Relativpositionen von Bildebenen, die durch die Ausdehnungsrichtung und die Abtastrichtung aufgespannt werden, längs der Abtastrichtung gegenüber den Relativpositionen der entsprechenden Ebenen des Volumenbereichs längs der Abtastrichtung verändert sind. Diese Bildebenen sind gegenüber entsprechenden Flächen des Volumenbereichs jedoch nicht verzerrt. Damit ist insbesondere gemeint, dass die vorgenannten Ebenen des Volumenbereichs winkeltreu und unter Erhaltung ihrer Streckenverhältnisse auf die Bildebenen abgebildet werden. Unter einer solchen im erfindungsgemäßen Sinne nicht verzerrten Abbildung ist beispielsweise eine Abbildung zu verstehen, die ein Rechteck wieder in ein Rechteck überführt. Bildebenen, die durch die Lichtausbreitungsrichtung und die Abtastrichtung aufgespannt werden, sind hingegen gegenüber entsprechenden Ebenen des Volumenbereichs verzerrt. Eine im erfindungsgemäßen Sinne verzerrte Abbildung führt beispielsweise ein Rechteck in ein Parallelogramm über.

Die erste Transformation erfolgt in den ersten Bildkoordinaten längs der Ausdehnungsrichtung und in den zweiten Bildkoordinaten längs der Abtastrichtung. Es werden also genau jene Bildebenen transformiert, die durch die Scherung im erfindungsgemäßen Sinne nicht verzerrt sind. Durch die erste Transformation werden die in den Volumenbilddaten enthaltenen Bildinformationen gleichsam derart aufgeteilt, dass der durch die Scherung verzerrte Teil der Bildinformationen von dem von der Scherung nicht verzerrten Teil der Bildinformationen getrennt verarbeitet werden kann. Der nicht verzerrte Teil der Bildinformationen ist durch den ersten Teil der Volumenbilddaten des Schichtbildstapels bzw. die ersten Spektraldaten repräsentiert, während der verzerrte Teil der Bildinformationen durch den zweiten Teil der Volumenbilddaten des Schichtbildstapels repräsentiert ist. Die ersten Spektraldaten können ferner als Grundlage für weitere Bildverarbeitungsprozesse dienen, insbesondere der Anwendung von Filtern, die auf Dekonvolutionsalgorithmen basieren, um beispielsweise eine Bildunschärfe zu beseitigen.

Bei der Entscheroperation handelt es sich insbesondere um die Multiplikation des zweiten Teils der Volumenbilddaten des Schichtbildstapels mit einer sogenannten Phasenrampe.

Der Zielbildraum kann vorteilhafterweise derart gewählt werden, dass eine Korrelation der schiefebenenmikroskopisch aufgenommenen Volumenbilddaten mit Bilddaten hergestellt werden kann, die mit anderen Methoden, z.B. mittels eines Konfokalmikroskops, gewonnen werden.

In einer vorteilhaften Weiterbildung des Verfahrens werden durch eine eindimensionale zweite Transformation des durch die Entscheroperation entscherten zweiten Teils der Volumenbilddaten des Schichtbildstapels zweite Spektraldaten erzeugt, wobei die zweite Transformation in dritten Bildkoordinaten längs der Lichtausbreitungsrichtung erfolgt. In dem Zielbildraum wird aus den ersten Spektraldaten und den zweiten Spektraldaten das Volumenbild erzeugt. Die zweite Transformation ist eine Interpolationsoperation in den dritten Bildkoordinaten. Durch die zweite Transformation werden die Bildpunkte des durch die Entscheroperation entscherten zweiten Teils der Volumenbilddaten interpoliert. Die zweiten Spektraldaten können ferner als Grundlage für weitere Bildverarbeitungsprozesse dienen.

In einer weiteren vorteilhaften Weiterbildung des Verfahrens ist die erste Transformation und/oder die zweite Transformation eine Chirp-Z-Transformation. Die Chirp-Z-Transformation kann numerisch effizient durch zwei diskrete Fourier-Transformationen (DFT) dargestellt werden, die jeweils durch eine schnelle Fourier-Transformation (FFT) durchgeführt werden kann. Für diese stehen eine Vielzahl von Algorithmen und Implementierungen sowohl für zentrale Verarbeitungseinheiten (CPU) als auch Grafikprozessoren (GPU) zur Verfügung.

In einer weiteren vorteilhaften Weiterbildung des Verfahrens wird durch die erste und/oder zweite Transformation ein Raster des Volumenbildes eingestellt. Insbesondere bei der Anwendung der Chirp-Z-Transformation kann das auch als Sampling bezeichnete Raster der diskreten Spektraldaten bei der Transformation frei gewählt werden. Dadurch liegen schon die Spektraldaten in dem gewünschten Raster vor, so dass zur Erzeugung des Volumenbildes im Zielbildraum nur eine einfache DFT notwendig ist, die sich effizient als FFT ausführen lässt.

In einer weiteren vorteilhaften Weiterbildung des Verfahrens wird die Auflösung des Volumenbildes durch Anwenden einer ersten Bandpassfunktion auf die ersten Spektraldaten und/oder Anwenden einer zweiten Bandpassfunktion auf die zweiten Spektraldaten begrenzt. Bei allen drei Transformationen können in den Spektraldaten Frequenzen jenseits der Nyquist-Frequenz, d.h. Frequenzen, die aufgrund des Rasters der Volumenbilddaten gar nicht aufgelöst werden können, erzeugt werden. Diese Frequenzen verursachen bei der Erzeugung des Volumenbildes Artefakte aufgrund des sogenannten Alias-Effektes. Durch die Anwendung einer Bandpassfunktion werden diese Frequenzen aus den Spektraldaten beseitigt.

In einer weiteren vorteilhaften Weiterbildung des Verfahrens liegt die Abtastrichtung längs der optischen Achse der Transportoptik, wodurch sich eine axiale Abtastung der Probe mittels des Lichtblattes realisieren lässt.

In einer alternativen Weiterbildung des Verfahrens liegt die Abtastrichtung quer zur optischen Achse der Transportoptik. In dieser Weiterbildung wird die Probe lateral mit dem Lichtblatt abgetastet.

Vorzugsweise wird die Probe durch das Lichtblatt zur Erzeugung von Fluoreszenzlicht beleuchtet. Dadurch lässt sich ein besonders probenschonendes fluoreszenzmikroskopisches Verfahren realisieren, das zugleich eine hohe Auflösung ermöglicht.

Ein weiterer Aspekt der Erfindung betrifft ein Lichtblattmikroskop zur Erzeugung eines Volumenbildes einer Probe. Das erfindungsgemäße Lichtblattmikroskop umfasst eine Beleuchtungsoptik zur Erzeugung eines Lichtblattes in einem Zwischenbildraum. Das Lichtblatt erstreckt sich längs einer Lichtausbreitungsrichtung und einer hierzu senkrechten Ausdehnungsrichtung. Das Lichtblattmikroskop umfasst eine Transportoptik zum Abbilden des Lichtblattes in die Probe und zum Abbilden von aus der Probe stammendem Detektionslicht in den Zwischenbildraum. Das Lichtblattmikroskop hat eine Abtastvorrichtung zum schrittweisen Beleuchten mehrerer längs einer Abtastrichtung aufeinanderfolgender Schichten der Probe mit dem Lichtblatt. Dadurch wird ein Volumenbereich der Probe abgetastet, der im Wesentlichen die Form eines Parallelepipeds hat, das durch die Lichtausbreitungsrichtung, die Ausdehnungsrichtung und die Abtastrichtung aufgespannt ist. Das Lichtblattmikroskop hat eine Detektionsoptik zum Erzeugen jeweils eines Schichtbildes aus den Zwischenbildern der beleuchteten Schichten, wobei die optische Achse der Detektionsoptik gegenüber der optischen Achse der Transportoptik um einen Kippwinkel verkippt ist. Ferner weist das Lichtblattmikroskop eine Bildverarbeitungseinheit auf.

Die Bildverarbeitungseinheit erzeugt Volumenbilddaten, die einen aus den Schichtbildern zusammengesetzten Schichtbildstapel darstellen, wobei die Relativpositionen der einzelnen Schichtbilder längs der Lichtausbreitungsrichtung aufgrund der Verkippung der optischen Achse der Detektionsoptik gegenüber der optischen Achse der Transportoptik gegenüber den Relativpositionen der entsprechenden beleuchteten Schichten längs der Lichtausbreitungsrichtung verändert sind, so dass der Schichtbildstapel gegenüber dem abgetasteten Volumenbereich um den Kippwinkel geschert ist. Die Bildverarbeitungseinheit erzeugt erste Spektraldaten durch eine zweidimensionale erste Transformation eines durch die Scherung nicht verzerrten ersten Teils der Volumenbilddaten des Schichtbildstapels, wobei die erste Transformation in ersten Bildkoordinaten längs der Ausdehnungsrichtung und in zweiten Bildkoordinaten längs der Abtastrichtung erfolgt. Die Bildverarbeitungseinheit wendet eine Entscheroperation auf einen durch die Scherung verzerrten zweiten Teil der Volumenbilddaten des Schichtbildstapels an. Ferner erzeugt die Bildverarbeitungseinheit in einem Zielbildraum, der durch die Ausdehnungsrichtung, die Abtastrichtung und eine zu den beiden vorgenannten Richtungen senkrechte dritte Richtung definiert ist, aus den ersten Spektraldaten und dem durch die Entscheroperation entscherten zweiten Teil der Volumenbilddaten das Volumenbild.

In einer vorteilhaften Weiterbildung erzeugt die Bildverarbeitungseinheit zweite Spektraldaten durch eine eindimensionale zweite Transformation des durch die Entscheroperation entscherten zweiten Teils der Volumenbilddaten des Schichtbildstapels, wobei die zweite Transformation in dritten Bildkoordinaten längs der Lichtausbreitungsrichtung erfolgt. Ferner erzeugt die Bildverarbeitungseinheit aus den ersten Spektraldaten und den zweiten Spektraldaten das Volumenbild. Durch die zweite Transformation werden die Bildpunkte des durch die Entscheroperation entscherten zweiten Teils der Volumenbilddaten interpoliert. Die zweiten Spektraldaten können ferner als Grundlage für weitere Bildverarbeitungsprozesse, die durch die Bildverarbeitungseinheit durchgeführt werden können, dienen.

In einer weiteren vorteilhaften Weiterbildung weist das Lichtblattmikroskop ein einziges der Probe zugewandtes Objektiv auf. Dies ermöglicht einen Zugang zur fluoreszenzbasierten mikroskopischen Lichtblattbildmikroskopie in Proben, deren Abbildung mittels eines konventionellen, über zwei Objektive verfügenden Lichtblattmikroskops etwa mangels Raum nicht möglich ist.

In einer vorteilhaften Weiterbildung weist die Beleuchtungsoptik wenigstens eine Lichtquelle und ein Beleuchtungsobjektiv auf. Die Lichtquelle erzeugt das Lichtblatt, das durch das Beleuchtungsobjektiv in den Zwischenbildraum abgebildet wird. Zur Erzeugung des Lichtblattes kann die Lichtquelle z.B. eine Zylinderlinse aufweisen. Alternativ kann die Lichtquelle mittels eines Abtastelements auch ein quasistatisches Lichtblatt erzeugen.

In einer vorteilhaften Weiterbildung umfasst die Transportoptik wenigstens das der Probe zugewandte Objektiv, eine Tubuslinse und ein Projektionsobjektiv. Die Transportoptik bildet vorzugsweise ein beidseitig telezentrisches optisches System, das den Bildtransport von dem Zwischenbildraum in die Probe und von der Probe in den Zwischenbildraum ermöglicht.

In einer vorteilhaften Weiterbildung u die Detektionsoptik wenigstens ein Detektionsobjektiv, eine erste Tubuslinse, eine zweite Tubuslinse und einen Bildsensor, beispielsweise einen CCD- oder CMOS-Chip. Das Detektionsobjektiv und die beiden Tubuslinsen bilden die in dem Zwischenbildraum erzeugten Zwischenbilder der beleuchteten Probenschichten jeweils auf den Bildsensor ab.

In einer vorteilhaften Weiterbildung umfasst die Abtastvorrichtung mindestens einen Rasterspiegel, durch welchen das Lichtblatt quer zur optischen Achse der Transportoptik bewegbar ist.

In einer vorteilhaften Weiterbildung umfasst die Abtastvorrichtung mindestens eine elektronische Fokussiereinrichtung zum Einstellen einer Schärfeebene der Transportoptik. Durch die elektronische Fokussiereinrichtung kann das Lichtblatt in einer axialen Abtastbewegung gleichsam durch die Probe geschoben werden.

Die Erfindung wird im Folgenden an Hand der Figuren näher erläutert. Darin zeigen:

Figur 1    ein erstes Ausführungsbeispiel eines Lichtblattmikroskops, das eine Abtastung lateral zur optischen Achse einer Transportoptik vorsieht,

Figur 2    ein zweites Ausführungsbeispiel eines Lichtblattmikroskops, das eine Abtastung längs der optischen Achse der Transportoptik vorsieht,

Figur 3    die Geometrie eines Detektionsvolumens des Lichtblattmikroskops bei Abtastung lateral zur optischen Achse der Transportoptik nach Figur 1,

Figur 4    die Geometrie eines Detektionsvolumens des Lichtblattmikroskops bei Abtastung längs der optischen Achse der Transportoptik nach Figur 2,

Figur 5    ein Flussdiagramm zur Erläuterung eines Ausführungsbeispiels des Verfahrens zur Erzeugung eines Volumenbildes,

Figur 6    ein schiefwinkliges Koordinatensystem von Volumenbilddaten bei Abtastung lateral zur optischen Achse der Transportoptik nach Figur 1,

Figur 7    ein schiefwinkliges Koordinatensystem von Volumenbilddaten bei Abtastung längs der optischen Achse der Transportoptik nach Figur 2,

Figur 8    ein auf einen Zielbildraum bezogenes rechtwinkliges Koordinatensystem, und

Figur 9    ein Blockdiagramm zur Erläuterung eines Verfahrens zur Datennahme mit Hilfe des Lichtblattmikroskops mit lateraler Lichtblattabtastung gemäß Figur 1 oder mit axialer Lichtblattabtastung gemäß Figur 2.

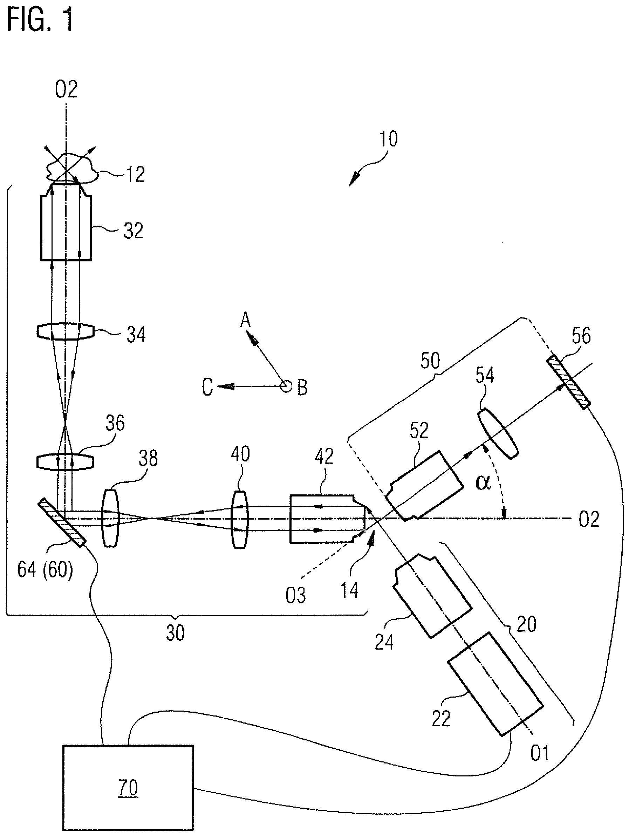

Figur 1 zeigt ein erstes Ausführungsbeispiel eines Lichtblattmikroskops 10 zur Erzeugung eines Volumenbildes einer Probe 12 in einer schematischen Darstellung.

Das Lichtblattmikroskop 10 umfasst eine Beleuchtungsoptik 20, eine Transportoptik 30 und eine Detektionsoptik 50. Die optische Achse O3 der Detektionsoptik 50 ist gegenüber der optischen Achse O2 der Transportoptik 30 um einen Kippwinkel $\alpha$ verkippt. Die optische Achse O1 der Beleuchtungsoptik 20 steht senkrecht auf der optischen Achse O3 der Detektionsoptik 50, so dass die optische Achse O1 der Beleuchtungsoptik 20 gegenüber der optischen Achse O2 der Transportoptik 30 um einen Winkel 90° - $\alpha$ verkippt ist. Die drei vorgenannten optischen Achsen O1, O2, O3 schneiden sich in einem Zwischenbildraum 14. Ferner weist das Lichtblattmikroskop 10 eine Bildverarbeitungseinheit 70 auf.

Die Beleuchtungsoptik 20 umfasst eine Lichtquelle 22 und ein Beleuchtungsobjektiv 24. Die Lichtquelle 22 erzeugt ein Lichtblatt, beispielsweise mit Hilfe einer in Figur 1 nicht explizit gezeigten Zylinderlinse, wobei sich das Lichtblatt unter Bezugnahme auf ein in Figur 1 dargestelltes schiefwinkliges Koordinatensystem in einer Lichtausbreitungsrichtung A und einer hierzu senkrechten Ausdehnungsrichtung B erstreckt. Alternativ kann die Lichtquelle 22 mittels eines eigens hierfür vorgesehenen Abtastelements auch ein quasistatisches Lichtblatt erzeugen. Das Beleuchtungsobjektiv 24 bildet das Lichtblatt in den Zwischenbildraum 14 ab.

Die Transportoptik 30 umfasst von der Probe 12 her gesehen ein der Probe 12 zugewandtes Objektiv 32, eine erste Tubuslinse 34, ein erstes Okular 36, ein zweites Okular 38, eine zweite Tubuslinse 40 und ein Projektionsobjektiv 42, die längs der optischen Achse O2 der Transportoptik 30 angeordnet sind. Zwischen dem ersten Okular 36 und dem zweiten Okular 38 ist eine Abtastvorrichtung 60 mit einem Rasterspiegel 64 angeordnet, an dem die optische Achse O2 der Transportoptik 30 umgelenkt wird.

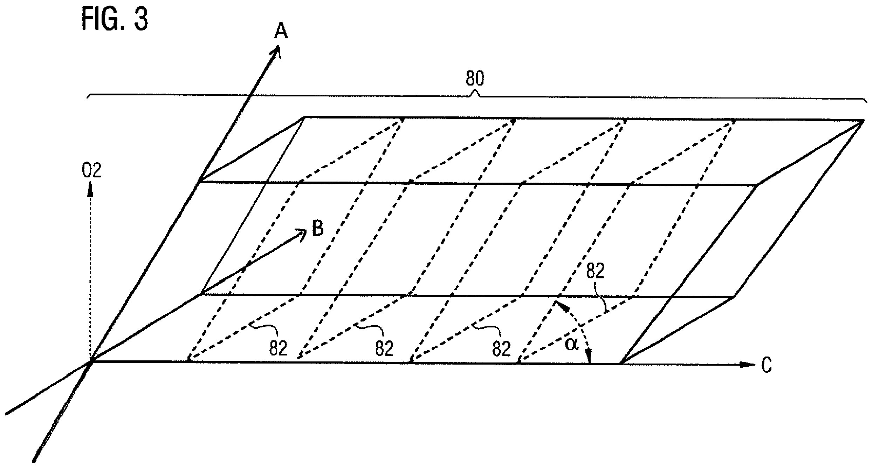

Die Transportoptik 30 bildet das Lichtblatt aus dem Zwischenbildraum 14 in die Probe 12 ab. Durch das Lichtblatt innerhalb der Probe 12 beleuchtete Schichten 82 (vgl. Figur 3) werden durch die Transportoptik 30 jeweils als Zwischenbild zurück in den Zwischenbildraum 14 abgebildet.

Mit Hilfe des beweglichen Rasterspiegels 64 kann das Lichtblatt längs einer Abtastrichtung C, die in der Probe 12 senkrecht zur optischen Achse O2 der Transportoptik 30 liegt, durch die Probe 12 bewegt werden. Dadurch können die längs der Abtastrichtung C aufeinanderfolgenden Schichten 82 der Probe 12 beleuchtet werden, so dass ein Volumenbereich 80 der Probe 12 abgetastet wird, der im Wesentlichen die Form eines Parallelepipeds hat, das durch die Lichtausbreitungsrichtung A, die Ausdehnungsrichtung B und die Abtastrichtung C aufgespannt und durch den Kippwinkel α charakterisiert ist. Die Geometrie des abgetasteten Volumenbereichs 80 ist in Figur 3 dargestellt. Der in Figur 3 gezeigte Volumenbereich 80 resultiert aus einer Scherung eines Quaders um einen Scherwinkel von 90° - α in Richtung der Abtastrichtung C.

Die Detektionsoptik 50 umfasst von dem Zwischenbildraum 14 her gesehen ein Detektionsobjektiv 52, eine Tubuslinse 54 und einen Bildsensor 56. Die in dem Zwischenbildraum 14 liegenden Zwischenbilder der beleuchteten Schichten 82 werden durch das Detektionsobjektiv 52 und die Tubuslinse 54 auf den Bildsensor 56 abgebildet. Auf diese Weise werden auf dem Bildsensor 56 Schichtbilder erzeugt, die den mit dem Lichtblatt beleuchteten Schichten 82 zugeordnet sind.

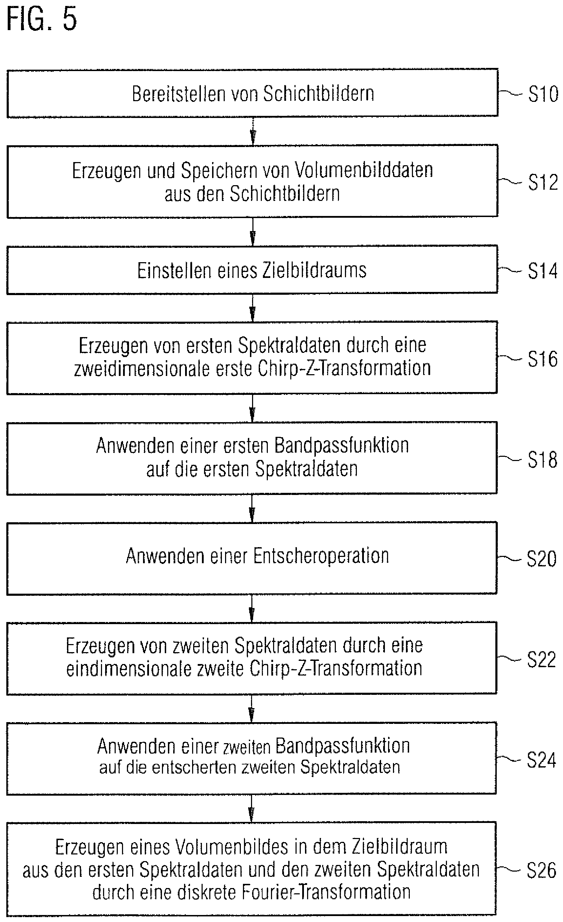

Die Bildverarbeitungseinheit 70 verarbeitet die durch den Bildsensor 56 aufgenommenen Schichtbilder in Form von Bilddaten weiter zu einem Volumenbild des in Figur 3 gezeigten Volumenbereichs 80 der Probe 12. Dieser Bildverarbeitungsprozess wird später unter Bezugnahme auf Figur 5 näher erläutert.

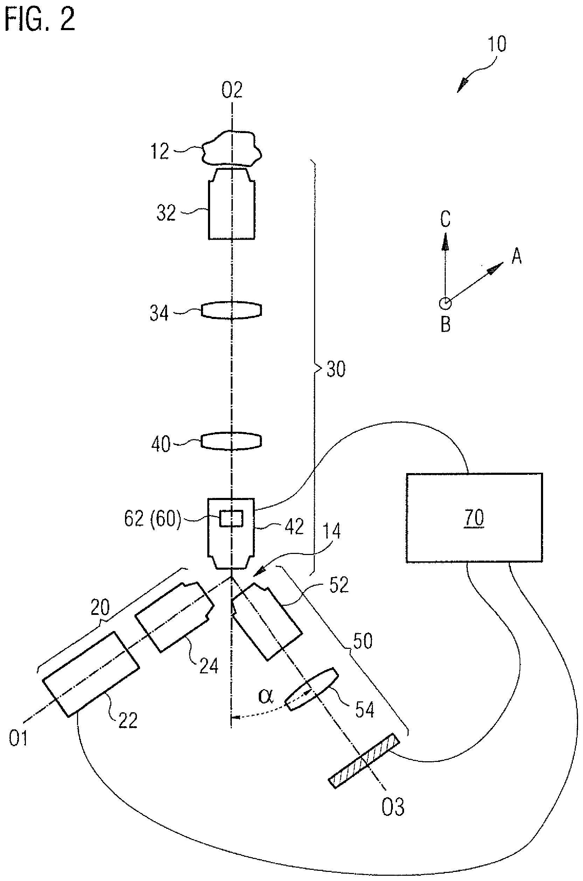

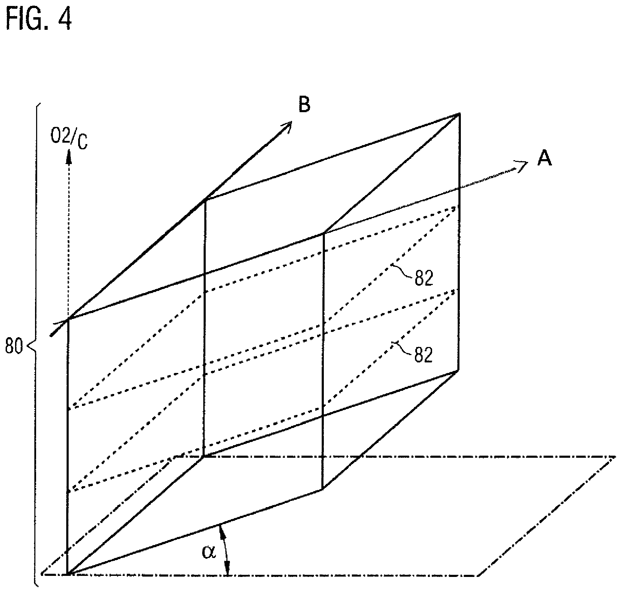

Bei dem in Figur 1 gezeigten Ausführungsbeispiel erfolgt die Abtastung der Probe 12 mittels des Lichtblatts in der Weise, dass das Lichtblatt in Abtastrichtung C quer zur optischen Achse O2 der Transportoptik 30 bewegt wird. Demgegenüber ist in Figur 2 ein zweites Ausführungsbeispiel des Lichtblattmikroskops 10 gezeigt, das sich von dem ersten Ausführungsbeispiel nach Figur 1 im Wesentlichen dadurch unterscheidet, dass die Abtastung der Probe 12 durch das Lichtblatt axial, d.h. längs der optischen Achse O2 der Transportoptik 30 erfolgt. Die Geometrie des derart abgetasteten Volumenbereichs 80 ist in Figur 4 dargestellt. Der in Figur 4 gezeigte Volumenbereich 80 resultiert aus einer Scherung eines Quaders um den Kippwinkel α in Richtung der Abtastrichtung C.

In dem zweiten Ausführungsbeispiel umfasst die Transportoptik 30 von dem Zwischenbildraum 14 her gesehen das Projektionsobjektiv 42, die beiden Tubuslinsen 34, 40 und das der Probe 12 zugewandte Objektiv 32. Das Projektionsobjektiv 42 weist eine elektronische Fokussiereinrichtung 62 auf.

Die Detektionsoptik 50 umfasst von dem Zwischenbildraum 14 her gesehen das Detektionsobjektiv 52, die Tubuslinse 54 und den Bildsensor 56.

In dem Ausführungsbeispiel nach Figur 2 ist die Abtastvorrichtung 60 durch die elektronische Fokussiereinrichtung 62 gebildet. Durch die elektronische Fokussiereinrichtung 62 sind das Lichtblatt und gleichzeitig die dazu koplanare Detektionsebene längs der optischen Achse O2 der Transportoptik 30 bewegbar. Das entsprechende Schichtbild der durch das Lichtblatt beleuchteten Schicht 82 wird durch den Bildsensor 56 aufgenommen.

Figur 5 zeigt ein Flussdiagramm zur Erläuterung des erfindungsgemäßen Verfahrens zur Erzeugung eines Volumenbildes.

In Schritt S10 werden die Schichtbilder bereitgestellt. Dies kann insbesondere mit Hilfe der lateralen Lichtblattabtastung gemäß Figur 1 oder mit Hilfe der axialen Lichtblattabtastung gemäß Figur 2 erfolgen. Die einzelnen Schichtbilder entsprechen jeweils den durch das Lichtblatt beleuchteten Schichten 82 längs der Abtastrichtung C innerhalb der Probe 12.

In Schritt S12 werden aus den bereitgestellten Schichtbildern Volumenbilddaten erzeugt. Die Volumenbilddaten repräsentieren einen aus den Schichtbildern zusammengesetzten Schichtbildstapel. Die einzelnen in dem Schichtbildstapel enthaltenen Schichtbilder sind aufgrund der Verkippung der optischen Achse O3 der Detektionsoptik 50 gegenüber der optischen Achse O2 der Transportoptik 30 längs der Lichtausbreitungsrichtung A gegeneinander versetzt, so dass der Schichtbildstapel ein um den Kippwinkel α geschertes Bild des Volumenbereichs 80 der Probe 12 darstellt.

Ferner werden die Volumenbilddaten in Schritt S12 in einem Speicherbereich abgelegt. Der Speicherbereich ist dabei so groß gewählt, dass er Bilddaten innerhalb eines quaderförmigen Volumens fassen kann, das den in Figur 3 bzw. Figur 4 gezeigten Volumenbereich vollständig einschließt. Dadurch ist gewährleistet, dass für die folgenden Operationen genug freie Speicherkapazität zur Verfügung steht.

Die Bildpunkte der Volumenbilddaten liegen auf den Koordinaten

$$\vec{p}\,'_{qrs} = q \cdot \Delta x' \, \hat{x}' + r \cdot \Delta y' \, \hat{y}' + s \cdot \Delta z' \, \hat{z}'$$

vor, wobei die Indizes q = 0 ... Q' - 1, r = 0 ...R' - 1, s = 0 ...S' - 1 die Rasterpunkte der detektierten Daten und (Δx',Δy', Δz') die Rasterabstände bezeichnen.

Erfolgt die Abtastung lateral zur optischen Achse O2 der Transportoptik 30, so sind die Vektoren x', $\hat{y}$ und $\hat{z}$ die Einheitsvektoren in Ausdehnungsrichtung B, Abtastrichtung C bzw. Ausbreitungsrichtung A. Somit entsprechen die Vektoren $\hat{x}$', $\hat{y}$' und $\hat{z}$' den Basisvektoren eines schiefwinkligen Koordinatensystems, in dem erste Bildkoordinaten, zweite Bildkoordinaten und dritte Bildkoordinaten definiert sind. Im Falle der lateralen Abtastung sind die ersten Bildkoordinaten

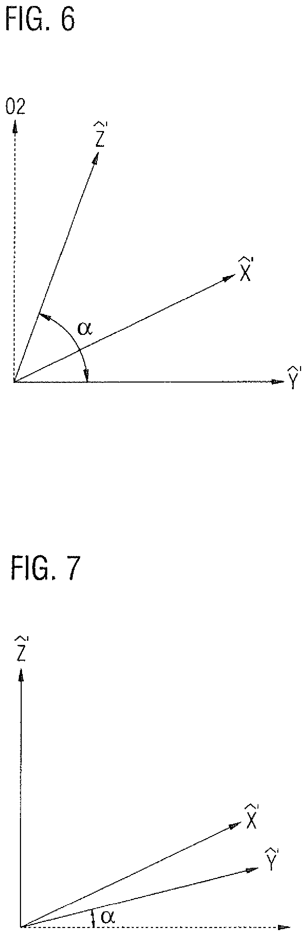

dem Vektor $\hat{z}$', die zweiten Bildkoordinaten dem Vektor $\hat{y}$' und die dritten Bildkoordinaten dem Vektor $\hat{x}$' zugeordnet. Das durch die Vektoren $\hat{x}$', $\hat{y}$' und $\hat{z}$' aufgespannte, schiefwinklige Koordinatensystem ist durch den Kippwinkel $\alpha$ charakterisiert. Die Vektoren $\hat{z}$' und $\hat{y}$' schließen den Kippwinkel $\alpha$ ein, während der Vektor $\hat{x}$' senkrecht auf der von $\hat{z}$' und $\hat{y}$' aufgespannten Ebene steht. Das durch die Vektoren $\hat{x}$', $\hat{y}$' und $\hat{z}$' aufgespannte Koordinatensystem ist für die laterale Abtastung in Figur 6 gezeigt. Die Rasterabstände $\Delta x$' und $\Delta z$' entsprechen den Pixelgrößen des Bildsensors 56, und $\Delta y$' entspricht einem Abtastschritt des Rasterspiegels 64.

Erfolgt die Abtastung axial, d.h. längs der optischen Achse O2 der Transportoptik 30, so sind die Vektoren $\hat{x}$', $\hat{y}$' und $\hat{z}$' die Einheitsvektoren in Ausdehnungsrichtung B, Ausbreitungsrichtung A bzw. Abtastrichtung C. Somit entsprechen die Vektoren $\hat{x}$', $\hat{y}$' und $\hat{z}$' wiederum den Basisvektoren eines schiefwinkligen Koordinatensystems, in dem erste Bildkoordinaten, zweite Bildkoordinaten und dritte Bildkoordinaten definiert sind. Im Falle der axialen Abtastung sind die ersten Bildkoordinaten dem Vektor $\hat{y}$', die zweiten Bildkoordinaten dem Vektor $\hat{z}$' und die dritten Bildkoordinaten dem Vektor $\hat{x}$' zugeordnet. Das durch die Vektoren $\hat{x}$', $\hat{y}$' und $\hat{z}$' aufgespannte, schiefwinklige Koordinatensystem ist durch den Kippwinkel $\alpha$ charakterisiert. Die Vektoren $\hat{z}$' und $\hat{y}$' schließen einen Winkel von 90° - $\alpha$ ein, während der Vektor $\hat{x}$' senkrecht auf der von $\hat{z}$' und $\hat{y}$' aufgespannten Ebene steht. Das im Falle axialer Abtastung durch die Vektoren $\hat{x}$', $\hat{y}$' und $\hat{z}$' aufgespannte Koordinatensystem ist in Figur 7 gezeigt.

Den Pixelgrößen des Bildsensors 56 entsprechen $\Delta x$' und $\Delta y$', und $\Delta z$' entspricht einem Schritt der Fokussiereinrichtung 62 (z. B. Piezo-Fokussiereinrichtung) entlang der Abtastrichtung C.

In Schritt S14 wird ein Zielbildraum eingestellt, in dem die Volumenbilddaten dargestellt werden sollen. Dieser kann insbesondere so gewählt werden, dass eine Korrelation der schiefebenenmikroskopisch aufgenommenen Volumenbilddaten mit Bilddaten hergestellt werden kann, die mit anderen Methoden gewonnen werden.

Die Koordinaten der Bildpunkte des Zielbildraums sind

$$\vec{p}_{qrs} = q \cdot \Delta x\, \hat{\hat{x}} + r \cdot \Delta y\, \hat{\hat{y}} + s \cdot \Delta z\, \hat{\hat{z}},$$

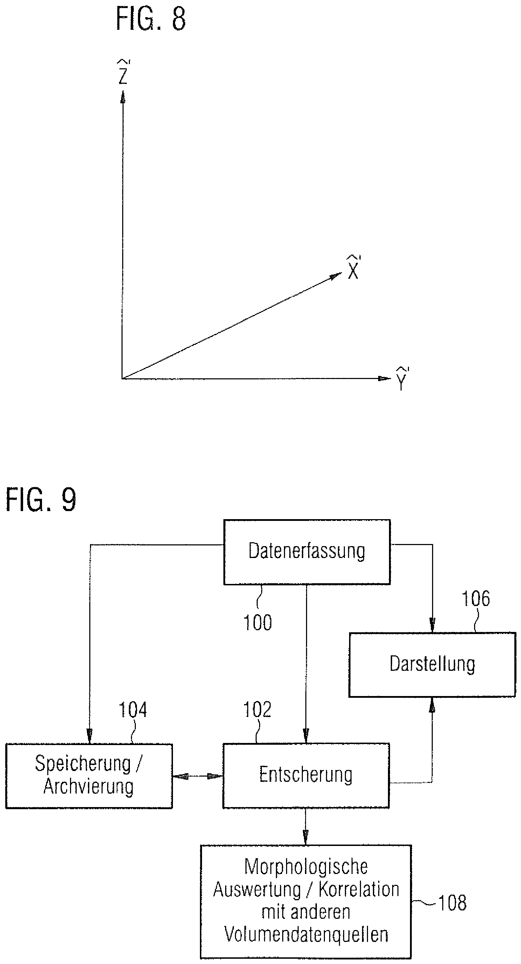

mit q = 0 ... Q - 1, r = 0 ... R - 1, s = 0 ... S - 1. Die Vektoren $\hat{x}$, $\hat{y}$ und $\hat{z}$ spannen ein rechtwinkliges Koordinatensystem auf, das in Figur 8 dargestellt ist. Das Spektrum des Zielbildraums, d.h. der Fourier-Raum, hat ein Raster, d.h. ein Sampling,

$$k_{lmn} = l \cdot \frac{\hat{\hat{x}}}{L\Delta x} + m \cdot \frac{\hat{\hat{y}}}{M\Delta y} + n \cdot \frac{\hat{\hat{z}}}{N\Delta z}.$$

Hier kann $\Delta x = \Delta x$' (analog für die anderen Dimensionen) gewählt werden. Es kann aber auch ein anderes Raster für den Zielbildraum als für die Volumenbilddaten gewählt werden. Beispielsweise kann ein Raster gewählt werden, dass einem Raster eines anderen bildgebenden Verfahrens entspricht. Insbesondere kann das Raster der Volumenbilddaten gröber gewählt werden als das Raster für den Zielbildraum. Dadurch kann eine schnellere Volumenbildgebung erfolgen, da weniger Bildpunkte abgetastet und verarbeitet werden müssen. Dabei ist zu beachten, dass die Punkte jenseits der Nyquist-Frequenz $\frac{1}{2\Delta x}$ (analog für die anderen Dimensionen) negative Frequenzen darstellen. Dies ist aus den Eigenschaften der diskreten Fourier-Transformation bekannt. Deshalb muss bei der Verrechnung der Fourier-Raum-Indizes $l$, m und $n$ für $l$ > L/2 $\rightarrow$ $l$ - L ersetzt werden, analog für m und n.

Zwischen den Bildpunkten der Volumenbilddaten und den Bildpunkten des Zielbildraums lässt sich mittels einer geometrischen Transformation umrechnen. Diese geometrische Transformation lässt sich beispielweise für den Fall, dass die Abtastung lateral zur optischen Achse O2 der Transportoptik 30 erfolgt, wie folgt darstellen:

$$p_{qrs} = \mathbf{M_a} p'_{qrs} = \begin{pmatrix} 1 & 0 & 0 \\ 0 & 1 & \cos\alpha \\ 0 & 0 & \sin\alpha \end{pmatrix} p'_{qrs},$$

wobei $\alpha$ den Kippwinkel angibt.

Erfolgt die Abtastung längs der optischen Achse O2 der Transportoptik 30, hat die geometrische Transformation die Form

$$p_{qrs} = \mathbf{M_b} p'_{qrs} = \begin{pmatrix} 1 & 0 & 0 \\ 0 & \cos\alpha & 0 \\ 0 & \sin\alpha & 1 \end{pmatrix} p'_{qrs}.$$

In Schritt S16 werden erste Spektraldaten durch eine zweidimensionale erste Chirp-Z-Transformation erzeugt. Die ersten Spektraldaten lassen sich im Fall einer Abtastung lateral zur optischen Achse O2 der Transportoptik 30 schreiben als

$$\hat{f}^{(1)}_{lms} = \sum_{q=0}^{Q'-1} \sum_{r=0}^{R'-1} f\left(p'_{qrs}\right) \exp\left[2\pi i \left(\frac{\Delta x'}{L\Delta x}ql + \frac{\Delta y'}{M\Delta y}rm\right)\right],$$

wobei $f(p'_{qrs}) = f_{qrs}$ das Signal am Bildpunkt $p'_{qrs}$ ist. Im Fall einer Abtastung längs der optischen Achse O2 der Transportoptik 30 lassen sich die ersten Spektraldaten schreiben als

$$\hat{f}^{(1)}_{lrn} = \sum_{q=0}^{Q'-1} \sum_{s=0}^{S'-1} f\left(p'_{qrs}\right) \exp\left[2\pi i \left(\frac{\Delta x'}{L\Delta x}ql + \frac{\Delta z'}{N\Delta z}sn\right)\right].$$

In den ersten Spektraldaten taucht der Kippwinkel $\alpha$ nicht auf, d.h. die ersten Spektraldaten sind von der Scherung nicht betroffen. Die erste Transformation teilt somit gleichsam die Volumenbilddaten in den von der Scherung nicht betroffenen ersten Teil und den von der Scherung betroffenen zweiten Teil auf.

Die ersten Spektraldaten lassen sich als eine zweidimensionale, separierbare erste Chirp-Z-Transformation formulieren. Die erste Chirp-Z-Transformation ist so gewählt, dass die ersten Spektraldaten in dem bei der Einstellung des Zielbildraums gewählten Raster vorliegen.

Die erste Chirp-Z-Transformation kann durch vier schnelle Fourier-Transformationen (FFT) - zwei FFT pro Dimension - berechnet werden kann. Alternativ kann die erste Chirp-Z-Transformation auch durch zwei zweidimensionale FFT berechnet werden.

Aufgrund der Separierbarkeit der ersten Chirp-Z-Transformation ist es nicht nötig, die benötigten Faltungskerne zweidimensional zu berechnen, es genügen zwei eindimensionale Berechnungen.

In Schritt S18 wird eine erste Bandpassfunktion auf die ersten Spektraldaten angewendet. Insbesondere durch die Wahl eines feineren Rasters für den Zielbildraum als für die Volumenbilddaten, d.h. die detektierten Daten, entstehen in den ersten Spektraldaten Frequenzen jenseits der Nyquist-Frequenz, d.h. Frequenzen, die aufgrund des Rasters gar nicht aufgelöst werden können. Diese Frequenzen erzeugen im Volumenbild unerwünschte Artefakte und werden deswegen mit Hilfe der ersten Bandpassfunktion aus den ersten Spektraldaten beseitigt. Die erste Bandpassfunktion wirkt als Blende des Detektionssystems in der Ausdehnungsrichtung B und der Ausbreitungsrichtung A.

In Schritt S20 wird eine Entscheroperation auf den zweiten Teil der Volumenbilddaten angewendet. Die Entscheroperation ist im Fall einer Abtastung lateral zur optischen Achse O2 der Transportoptik 30 eine Multiplikation des zweiten Teils der Volumenbilddaten mit einer Phasenrampe

$$\hat{f}^{(s)}_{lms} = \hat{f}^{(1)}_{lms} \exp\left[2\pi i \frac{\Delta z' \cos\alpha}{M\Delta y}sm\right].$$

Im Fall einer Abtastung längs der optischen Achse O2 der Transportoptik 30 ist die Entscheroperation einer Multiplikation des zweiten Teils der Volumenbilddaten mit einer Phasenrampe

$$\hat{f}^{(s)}_{lrn} = \hat{f}^{(1)}_{lrn} \exp\left[2\pi i \frac{\Delta y' \sin\alpha}{M\Delta z}rn\right].$$

Diese Multiplikation wird für alle s = 0 ...S' - 1 bzw. r = 0 ... R' - 1 durchgeführt.

In Schritt S22 werden zweite Spektraldaten durch eine eindimensionale zweite Chirp-Z-Transformation erzeugt. Die zweiten Spektraldaten lassen sich im Fall einer Abtastung lateral zur optischen Achse O2 der Transportoptik 30 schreiben als

$$\widetilde{f}_{lmn}^{(2)} = \sum_{s=0}^{S'-1} f_{lms} \exp\left[2\pi i \frac{\Delta z' \sin\alpha}{N\Delta z} sn\right].$$

Die zweiten Spektraldaten sind durch die Scherung betroffen, was bedeutet, dass hier der Kippwinkel $\alpha$ auftritt. Im Fall einer Abtastung parallel zur optischen Achse O2 der Transportoptik lassen sich die zweiten Spektraldaten schreiben als

$$\widetilde{f}_{lmn}^{(2)} = \sum_{s=0}^{S'-1} f_{lms} \exp\left[2\pi i r m\right].$$

Die zweite Chirp-Z-Transformation ist so gewählt, dass die zweiten Spektraldaten in dem bei der Einstellung des Zielbildraums gewählten Raster vorliegen.

In Schritt S24 wird eine zweite Bandpassfunktion auf die zweiten Spektraldaten angewendet. Die zweite Bandpassfunktion entfernt Frequenzen jenseits der Nyquist-Frequenz aus den zweiten Spektraldaten, so dass das aus den zweiten Spektraldaten erzeugte Volumenbild frei von Artefakten ist, die durch den Alias-Effekt entstehen.

Die erste und die zweite Bandpassfunktion können insbesondere die Form eines optimalen Filters, eines sogenannten Wiener-Filters, aufweisen. Generell sind auch verschiedene andere Formen denkbar, beispielsweise eine harte Kante oder eine Fenster-Funktionen wie beispielsweise Hamming- oder Von-Hann-Fenster.

In Schritt S26 wird durch eine diskrete Fourier-Transformation (DFT) aus den ersten Spektraldaten und den zweiten Spektraldaten das Volumenbild erzeugt. Da die ersten Spektraldaten und die zweiten Spektraldaten jeweils durch die erste bzw. zweite Chirp-Z-Transformation, erzeugt wurden, entspricht das Raster der Spektraldaten bereits dem gewählten Raster des Zielbildraums, so dass zu Erzeugung des Volumenbildes nur noch eine einfach und effizient durchführbare DFT notwendig ist.

Durch das Verfahren nach Figur 5 ist es also eine effiziente und artefaktfreie Volumenbildgebung mit vergleichsweise geringem Aufwand realisiert.

In Figur 9 ist ein Blockdiagram zur Erläuterung der Datennahme mit Hilfe des oben beschriebenen Lichtblattmikroskops 10 gemäß Figur 1 oder Figur 2 gezeigt. In dem Verfahren zur Datennahme erfolgt eine Erfassung der Volumenbilddaten in einem Funktionsblock 100. Die Volumenbilddaten werden in einem Funktionsblock 102 zur Erzeugung eines Volumenbildes entschert, in einem Funktionsblock 104 in einem nicht-flüchtigen Speicher abgelegt und/oder in einem Funktionsblock 106 dargestellt. Das in dem Funktionsblock 102 erzeugte Volumenbild wird in dem nicht-flüchtigen Speicher des Funktionsblocks 104 abgelegt, in dem Funktionsblock 106 dargestellt und/oder in einem Funktionsblock 108 ausgewertet. Die einzelnen Funktionsblöcke 100 bis 108 im Folgenden näher beschrieben.

In dem Funktionsblock 100 werden die Volumenbilddaten erfasst. Diese Datenerfassung erfolgt insbesondere mit Hilfe der Schritte S10 und S12 nach Figur 5. Ausgabe des Funktionsblocks 100 sind die Volumenbilddaten.

In Funktionsblock 102 werden die Volumenbilddaten entschert. Diese Entscherung erfolgt insbesondere mit Hilfe der Schritte S14 bis S26 des Verfahrens nach Figur 5.

Quelle der Volumenbilddaten sind die Datenerfassung in dem Funktionsblock 100 oder der nicht-flüchtige Speicher des Funktionsblocks 104. Ausgabe des Funktionsblocks 102 ist das Volumenbild der Probe 12.

In dem Funktionsblock 104 werden Bilddaten für eine spätere Weiterverarbeitung in dem nicht-flüchtigen Bildspeicher abgelegt. Bei den gespeicherten Bilddaten handelt es sich um die in dem Funktionsblock 100 erfassten, unverarbeiteten Volumenbilddaten oder um das in dem Funktionsblock 102 erzeugte Volumenbild. Der Funktionsblock 104 kann die in dem nicht-flüchtigen Speicher abgelegten Volumenbilddaten zur Entscherung an den Funktionsblock 102 ausgeben.

In dem Funktionsblock 106 findet eine Darstellung von Bilddaten statt. Die Darstellung erfolgt beispielsweise auf einem Bildschirm. Bei den dargestellten Bilddaten handelt es sich um die in dem Funktionsblock 100 erfassten, unverarbeiteten Volumenbilddaten oder um das in dem Funktionsblock 102 erzeugte Volumenbild.

In dem Funktionsblock 108 findet die Weiterverarbeitung des in dem Funktionsblock 102 erzeugten Volumenbildes statt. Beispielsweise kann eine morphologische Auswertung des Volumenbildes erfolgen oder das Volumenbild mit Bilddaten verglichen werden, die mit anderen, z.B. konfokalmikroskopischen Methoden gewonnen werden.

Das Verfahren nach Figur 9 ist ein Beispiel dafür, wie sich die Volumenbilderzeugung nach Figur 5 in den Betrieb des in den Figuren 1 und 2 gezeigten Lichtblattmikroskops 10 einbinden lässt.

Bezugszeichenliste

| 10 | Lichtblattmikroskop |
|---|---|
| 12 | Probe |
| 20 | Beleuchtungsoptik |
| 22 | Lichtquelle |
| 24 | Beleuchtungsobjektiv |
| 30 | Transportoptik |
| 32 | Objektiv |
| 34, 40 | Tubuslinse |
| 36, 38 | Okular |
| 42 | Projektionsobjektiv |
| 50 | Detektionsoptik |
| 52 | Detektionsobjektiv |
| 54 | Tubuslinse |
| 56 | Bildsensor |
| 60 | Abtastvorrichtung |
| 62 | elektronische Fokussiereinrichtung |
| 64 | Rasterspiegel |
| 70 | Bildverarbeitungseinheit |
| 80 | Volumenbereich |
| 82 | Probenschicht |
| A | Lichtausbreitungsrichtung |
| B | Ausdehnungsrichtung |
| C | Abtastrichtung |
| A | Kippwinkel |
| 102 bis 108 | Funktionsblöcke |

## Patentansprüche

1. Lichtblattmikroskopisches Verfahren zur Erzeugung eines Volumenbildes einer Probe (12), bei dem

in einem Zwischenbildraum (14) durch eine Beleuchtungsoptik (20) ein Lichtblatt erzeugt wird, das mit Hilfe einer Transportoptik (30) in die Probe (12) abgebildet wird, wobei sich das Lichtblatt längs einer Lichtausbreitungsrichtung (A) und einer hierzu senkrechten Ausdehnungsrichtung (B) erstreckt;

mit Hilfe des Lichtblattes mehrere längs einer Abtastrichtung (C) aufeinanderfolgende Schichten (82) der Probe (12) beleuchtet werden, so dass ein Volumenbereich (80) der Probe (12) abgetastet wird, der im Wesentlichen die Form eines Parallelepipeds hat, das durch die Lichtausbreitungsrichtung (A), die Ausdehnungsrichtung (B) und die Abtastrichtung (C) aufgespannt ist;

die beleuchteten Schichten (82) durch die Transportoptik (30) jeweils als Zwischenbild in den Zwischenbildraum (14) abgebildet werden;

durch eine Detektionsoptik (50), deren optische Achse (O3) gegenüber der optischen Achse (O2) der Transportoptik (30) um einen Kippwinkel ($\alpha$) verkippt ist, aus den Zwischenbildern der beleuchteten Schichten (82) jeweils ein Schichtbild erzeugt wird; und

Volumenbilddaten erzeugt werden, die einen aus den Schichtbildern zusammengesetzten Schichtbildstapel darstellen, wobei die Relativpositionen der einzelnen Schichtbilder längs der Lichtausbreitungsrichtung (A) aufgrund der Verkippung der optischen Achse (O3) der Detektionsoptik (50) gegenüber der optischen Achse (O2) der Transportoptik (30) gegenüber den Relativpositionen der entsprechenden beleuchteten Schichten (82) längs der Lichtausbreitungsrichtung (A) verändert sind, so dass der Schichtbildstapel gegenüber dem abgetasteten Volumenbereich (80) um den Kippwinkel (58) geschert ist;

**dadurch gekennzeichnet, dass** erste Spektraldaten durch eine zweidimensionale erste Transformation eines durch die Scherung nicht verzerrten ersten Teils der Volumenbilddaten des Schichtbildstapels erzeugt werden, wobei die erste Transformation in ersten Bildkoordinaten längs der Ausdehnungsrichtung (B) und in zweiten Bildkoordinaten längs der Abtastrichtung (C) in den Fourier-Raum erfolgt;

eine Entscheroperation auf einen durch die Scherung verzerrten zweiten Teil der Volumenbilddaten angewendet wird;

durch die Ausdehnungsrichtung (B), die Abtastrichtung (C) und eine zu den beiden vorgenannten Richtungen senkrechte dritte Richtung ein Zielbildraum definiert wird; und

in dem Zielbildraum aus den ersten Spektraldaten und dem durch die Entscheroperation entscherten zweiten Teil der Volumenbilddaten das Volumenbild erzeugt wird.

2. Verfahren nach Anspruch 1, **dadurch gekennzeichnet, dass** zweite Spektraldaten durch eine eindimensionale zweite Transformation des durch die Entscheroperation entscherten zweiten Teils der Volumenbilddaten des Schichtbildstapels erzeugt werden, wobei die zweite Transformation in dritten Bildkoordinaten längs der Lichtausbreitungsrichtung (A) erfolgt, und in dem Zielbildraum aus den ersten Spektraldaten und den zweiten Spektraldaten das Volumenbild erzeugt wird.

3. Verfahren einem der Ansprüche 1 oder 2, **dadurch gekennzeichnet, dass** die erste Transformation und/oder die zweite Transformation eine Chirp-Z-Transformation ist.

4. Verfahren einem der Ansprüche 1 bis 3, **dadurch gekennzeichnet, dass** durch die erste Transformation und/oder zweite Transformation ein Raster des Volumenbildes eingestellt wird.

5. Verfahren nach einem der Ansprüche 1 bis 4, **dadurch gekennzeichnet, dass** die Auflösung des Volumenbildes durch Anwenden einer ersten Bandpassfunktion auf die ersten Spektraldaten und/oder Anwenden einer zweiten Bandpassfunktion auf die zweiten Spektraldaten begrenzt wird.

6. Verfahren nach einem der Ansprüche 1 bis 5, **dadurch gekennzeichnet, dass** die Abtastrichtung (C) längs der optischen Achse (O2) der Transportoptik (30) liegt.

7. Verfahren nach einem der Ansprüche 1 bis 6, **dadurch gekennzeichnet, dass** die Abtastrichtung (C) lateral zur optischen Achse (O2) der Transportoptik (30) liegt.

8. Verfahren nach einem der Ansprüche 1 bis 7, **dadurch gekennzeichnet, dass** die Probe (12) durch das Lichtblatt zur Erzeugung von Fluoreszenzlicht beleuchtet wird.

9. Uchtblattmikroskop (10) zur Erzeugung eines Volumenbildes einer Probe (12), mit

einer Beleuchtungsoptik (20) zur Erzeugung eines Lichtblattes, das sich längs einer Lichtausbreitungsrichtung (A) und einer hierzu senkrechten Ausdehnungsrichtung (B) erstreckt, in einem Zwischenbildraum (14);

einer Transportoptik (30) zum Abbilden des Lichtblattes in die Probe (12) und zum Abbilden von aus der Probe (12) stammendem Detektionslicht in den Zwischenbildraum (14);

einer Abtastvorrichtung (60) zum schrittweisen Beleuchten mehrerer längs einer Abtastrichtung (C) aufeinanderfolgender Schichten (82) der Probe (12) mit dem Lichtblatt, so dass ein Volumenbereich (80) der Probe (12) abgetastet wird, der im Wesentlichen die Form eines Parallelepipeds hat, das durch die Lichtausbreitungsrichtung (A), die Ausdehnungsrichtung (B) und die Abtastrichtung (C) aufgespannt ist;

einer Detektionsoptik (50) zum Erzeugen jeweils eines Schichtbildes aus den Zwischenbildern der beleuchteten Schichten (82), wobei die optische Achse (O3) der Detektionsoptik (50) gegenüber der optischen Achse (O2) der Transportoptik (30) um einen Kippwinkel ($\alpha$) verkippt ist; und

einer Bildverarbeitungseinheit (70), wobei

die Bildverarbeitungseinheit (70) Volumenbilddaten erzeugt, die einen aus den Schichtbildern zusammengesetzten Schichtbildstapel darstellen, wobei die Relativpositionen der einzelnen Schichtbilder längs der Lichtausbreitungsrichtung (A) aufgrund der Verkippung der optischen Achse (O3) der Detektionsoptik (50) gegenüber der optischen Achse (O2) der Transportoptik (30) gegenüber den Relativpositionen der entsprechenden beleuchteten Schichten (82) längs der Lichtausbreitungsrichtung (A) verändert sind, so dass der Schichtbildstapel ein gegenüber dem abgetasteten Volumenbereich (80) um den Kippwinkel ($\alpha$) geschert ist;

**dadurch gekennzeichnet, dass** die Bildverarbeitungseinheit (70) erste Spektraldaten durch eine zweidimensionale erste Transformation eines durch die Scherung nicht verzerrten ersten Teils der Volumenbilddaten des Schichtbildstapels erzeugt, wobei die erste Transformation in ersten Bildkoordinaten längs der Ausdehnungsrichtung (B) und zweiten Bildkoordinaten längs der Abtastrichtung (C) in den Fourier-Raum erfolgt;

die Bildverarbeitungseinheit (70) eine Entscheroperation auf einen durch die Scherung verzerrten zweiten Teil der Volumenbilddaten des Schichtbildstapels anwendet; und

die Bildverarbeitungseinheit (70) in einem Zielbildraum, der durch die Ausdehnungsrichtung (B), die Abtastrichtung (C) und eine zu den beiden vorgenannten Richtungen senkrechte dritte Richtung ein Zielbildraum definiert ist, aus den ersten Spektraldaten und dem durch die Entscheroperation entscherten zweiten Teil der Volumenbilddaten das Volumenbild erzeugt.

10. Lichtblattmikroskop (10) nach Anspruch 9, **dadurch gekennzeichnet, dass** die Bildverarbeitungseinheit (70) zweite Spektraldaten durch eine eindimensionale zweite Transformation des durch die Entscheroperation entscherten zweiten Teils der Volumenbilddaten des Schichtbildstapels erzeugt, wobei die zweite Transformation in dritten Bildkoordinaten längs der Lichtausbreitungsrichtung (A) erfolgt, und die Bildverarbeitungseinheit (70) in dem Zielbildraum aus den ersten Spektraldaten und den zweiten Spektraldaten das Volumenbild erzeugt.

11. Lichtblattmikroskop (10) nach einem der Ansprüche 9 oder 10, **gekennzeichnet durch** ein einziges der Probe (12) zugewandtes Objektiv (32).

12. Lichtblattmikroskop (10) nach einem der Ansprüche 9 bis 11, **dadurch gekennzeichnet, dass** die Beleuchtungsoptik (20) wenigstens eine Lichtquelle (22) und ein Beleuchtungsobjektiv (24) umfasst.

13. Lichtblattmikroskop (10) nach einem der Ansprüche 9 bis 12, **dadurch gekennzeichnet, dass** die Transportoptik (30) wenigstens das der Probe (12) zugewandte Objektiv (32), eine erste Tubuslinse (34), eine zweite Tubuslinse (40) und ein Projektionsobjektiv (42) umfasst.

14. Lichtblattmikroskop (10) nach einem der Ansprüche 9 bis 13, **dadurch gekennzeichnet, dass** die Detektionsoptik (50) wenigstens ein Detektionsobjektiv (52), eine Tubuslinse (54) und einen Bildsensor (56) umfasst.

15. Lichtblattmikroskop (10) nach einem der Ansprüche 9 bis 14, **dadurch gekennzeichnet, dass** die Abtastvorrichtung (60) mindestens einen Rasterspiegel (64) umfasst, durch welchen das Lichtblatt quer zur optischen Achse (O2) der Transportoptik (30) bewegbar ist.

16. Lichtblattmikroskop (10) nach einem der Ansprüche 9 bis 14, **dadurch gekennzeichnet, dass** die Abtastvorrichtung (60) mindestens eine elektronische Fokussiereinrichtung (62) zum Einstellen einer Schärfeebene der Transportoptik (30) umfasst.

**Claims**

1. A light sheet microscopic method for generating a volume image of a sample (12), in which

a light sheet is generated in an intermediate image space (14) by an illumination optical system (20), which light sheet is imaged into the sample (12) with the aid of a transport optical system (30), the light sheet extending along a light propagation direction (A) and an extension direction (B) perpendicular thereto;

a plurality of successive layers (82) of the sample (12) along a scanning direction (C) are illuminated with the aid of the light sheet so that a volume region (80) of the sample (12) that essentially has the shape of a parallelepiped spanned by the light propagation direction (A), the extension direction (B) and the scanning direction (C) is scanned;

the illuminated layers (82) are each imaged as an intermediate image into the intermediate image space (14) by the transport optical system (30);

by a detection optical system (50), the optical axis (O3) of which is tilted by a tilt angle ($\alpha$) with respect to the optical axis (O2) of the transport optical system (30), one layer image each is generated from the intermediate images of the illuminated layers (82); and volume image data which represent a layer image stack composed of the layer images are generated, the relative positions of the individual layer images along the light propagation direction (A) are changed with respect to the relative positions of the corresponding illuminated layers (82) along the light propagation direction (A) due to the tilting of the optical axis (O3) of the detection optical system (50) relative to the optical axis (O2) of the transport optical system (30), so that the layer image stack is sheared with respect to the scanned volume region (80) by the tilt angle (58);

**characterized in that** first spectral data are generated by a two-dimensional first transformation of a first part of the volume image data of the layer image stack, which first part is not distorted by the shearing, the first transformation taking place in first image coordinates along the extension direction (B) and in second image coordinates along the scanning direction (C) into the Fourier space;

an unshearing operation is applied to a second part of the volume image data distorted by the shearing;

a target image space is defined by the extension direction (B), the scanning direction (C) and a third direction perpendicular to the two afore-mentioned directions; and

in the target image space, the volume image is generated from the first spectral data and the second part of the volume image data unsheared by the unshearing operation.

2. The method according to claim 1, **characterized in that** second spectral data are generated by a one-dimensional second transformation of the second part of the volume image data of the layer image stack, which second part is unsheared by the unshearing operation, the second transformation taking place in third image coordinates along the light propagation direction (A), and the volume image is generated in the target image space from the first spectral data and the second spectral data.

3. The method according to any one of the claims 1 or 2, **characterized in that** the first transformation and/or the second transformation is a Chirp-Z transformation.

4. The method according to any one of the claims 1 to 3, **characterized in that** by the first transformation and/or the second transformation a raster of the volume image is set.

5. The method according to any one of the claims 1 to 4, **characterized in that** the resolution of the volume image is limited by applying a first band pass function on the first spectral data and/or by applying a second band pass function on the second spectral data.

6. The method according to any one of the claims 1 to 5, **characterized in that** the scanning direction (C) lies along the optical axis (O2) of the transport optical system (30).

7. The method according to any one of the claims 1 to 6, **characterized in that** the scanning direction (C) lies laterally to the optical axis (O2) of the transport optical system (30).

8. The method according to any one of the claims 1 to 7, **characterized in that** the sample (12) is illuminated by the light sheet for generating fluorescent light.

9. A light sheet microscope (10) for generating a volume image of a sample (12), comprising an illumination optical system (20) for generating a light sheet extending along a light propagation direction (A) and an extension direction (B) that is perpendicular thereto in an intermediate image space (14);

a transport optical system (30) for imaging the light sheet into the sample (12) and for imaging detection light coming from the sample (12) into the intermediate image space (14);

a scanning device (60) for the step-wise illumination of several layers (82) of the sample (12) with the light sheet, which layers are successive along a scanning direction (C), so that a volume region (80) of the sample (12) is scanned, which essentially has the shape of a parallelepiped that is spanned by the light propagation direction (A), the extension direction (B) and the scanning direction (C);

a detection optical system (50) for generating one layer image each from the intermediate images of the illuminated layers (82), the optical axis (O3) of the detection optical system (50) being tilted with respect to the optical axis (O2) of the transport optical system (30) by a tilt angle (a); and

an image processing unit (70), wherein

the image processing unit (70) generates volume image data that represent a layer image stack composed of the layer images, wherein the relative positions of the individual layer images along the light propagation direction (A) are changed with respect to the relative positions of the corresponding illuminated layers (82) along the light propagation direction (A) due to the tilting of the optical axis (O3) of the detection optical system (50) with respect to the optical axis (O2) of the transport optical system (30), so that the layer image stack is sheared with respect to the scanned volume region (80) by the tilt angle (a);

**characterized in that** the image processing unit (70) generates first spectral data by a two-dimensional first transformation of a first part of the volume image data of the layer image stack, which first part is not distorted by the shearing, wherein the first transformation takes place in first image coordinates along the extension direction (B) and second image coordinates along the scanning direction (C) into the Fourier space;

the image processing unit (70) applies an unshearing operation onto a second part of the volume image data of the layer image stack, which second part is distorted by the shearing; and

the image processing unit (70) generates the volume image in a target image space defined by the extension direction (B), the scanning direction (C) and a third direction that is perpendicular to the two afore-mentioned directions from the first spectral data and the second part of the volume image data unsheared by the unshearing operation.

10. The light sheet microscope (10) according to claim 9, **characterized in that** the image processing unit (70) generates second spectral data by a one-dimensional second transformation of the second part of the volume image data of the layer image stack, which second part is unsheared by the unshearing operation, wherein the second transformation takes place in third image coordinates along the light propagation direction (A), and the image processing unit (70) generates in the target image space the volume image from the first spectral data and the second spectral data.

11. The light sheet microscope (10) according to any one of the claims 9 or 10, **characterized by** a single objective (32) facing the sample (12).

12. The light sheet microscope (10) according to any one of the claims 9 to 11, **characterized in that** the illumination optical system (20) comprises at least a light source (22) and an illumination objective (24).

13. The light sheet microscope (10) according to any one of the claims 9 to 12, **characterized in that** the transport optical system (30) comprises at least the objective (32) facing the sample (12), a first tube lens (34), a second tube lens (40) and a projection objective (42).

14. The light sheet microscope (10) according to any one of the claims 9 to 13, **characterized in that** the detection optical system (50) comprises at least one detection objective (52), a tube lens (54) and an image sensor (56).

15. The light sheet microscope (10) according to any one of the claims 9 to 14, **characterized in that** the scanning device (60) comprises at least one raster mirror (64), by which the light sheet is movable transversely to the optical axis (O2) of the transport optical system (30).

16. The light sheet microscope (10) according to any one of the claims 9 to 14, **characterized in that** the scanning device (60) comprises at least one electronic focusing device (62) for setting the plane of focus of the transport optical system (30).

**Revendications**

1. Procédé de microscopie à feuille de lumière permettant de produire une image volumique d'un échantillon (12), dans lequel,

dans un espace d'image intermédiaire (14), une optique d'éclairage (20) produit une feuille de lumière qui est représentée dans l'échantillon (12) à l'aide d'une optique de transport (30), la feuille de lumière s'étendant le long d'une direction de propagation de lumière (A) et d'une direction d'extension (B) perpendiculaire à celle-ci ;

à l'aide de la feuille de lumière, plusieurs tranches (82) successives le long d'une direction de balayage (C) de l'échantillon (12) sont éclairées de sorte qu'une zone volumique (80) de l'échantillon (12) est balayée qui présente substantiellement la forme d'un parallélépipède qui est défini par la direction de propagation de lumière (A), la direction d'extension (B) et la direction de balayage (C) ;

les tranches éclairées (82) sont représentées dans l'espace d'image intermédiaire (14) par l'optique de transport (30) respectivement sous la forme d'une image intermédiaire ;

une optique de détection (50) dont l'axe optique (O3) est incliné par rapport à l'axe optique (O2) de l'optique de transport (30) selon un angle d'inclinaison (α) produit respectivement une image tomographique à partir des images intermédiaires des tranches éclairées (82) ; et

des données d'image volumique sont produites qui représentent une pile d'images tomographiques composée des images tomographiques, les positions relatives des images tomographiques individuelles étant modifiées le long de la direction de propagation de lumière (A), en raison de l'inclinaison de l'axe optique (O3) de l'optique de détection (50) par rapport à l'axe optique (O2) de l'optique de transport (30), par rapport aux positions relatives des tranches éclairées (82) correspondantes le long de la direction de propagation de lumière (A) de sorte que la pile d'images tomographiques est cisaillée selon l'angle d'inclinaison (58) par rapport à la zone volumique (80) balayée ;

**caractérisé en ce que** des premières données spectrales sont produites par une première transformation bidimensionnelle d'une première partie, non déformée par le cisaillement, des données d'image volumique de la pile d'images tomographiques, la première transformation ayant lieu à des premières coordonnées d'image le long de la direction d'extension (B) et à des deuxièmes coordonnées d'image le long de la direction de balayage (C) dans l'espace de Fourier ;

une opération de décisaillement est appliquée à une deuxième partie, déformée par le cisaillement, des données d'image volumique ;

la direction d'extension (B), la direction de balayage (C) et une troisième direction perpendiculaire aux deux dites directions définissent un espace d'image cible ; et

dans l'espace d'image cible, l'image volumique est produite à partir des premières données spectrales et de la deuxième partie, décisaillée par l'opération de décisaillement, des données d'image volumique.

**2.** Procédé selon la revendication 1, **caractérisé en ce que** des deuxièmes données spectrales sont produites par une deuxième transformation unidimensionnelle de la deuxième partie, décisaillée par l'opération de décisaillement, des données d'image volumique de la pile d'images tomographiques, la deuxième transformation ayant lieu à des troisièmes coordonnées d'image le long de la direction de propagation de lumière (A), et dans l'espace d'image cible, l'image volumique est produite à partir des premières données spectrales et des deuxièmes données spectrales.

**3.** Procédé selon l'une quelconque des revendications 1 ou 2, **caractérisé en ce que** la première transformation et/ou la deuxième transformation est une transformation en Z chirp.

**4.** Procédé selon l'une quelconque des revendications 1 à 3, **caractérisé en ce que** la première transformation et/ou la deuxième transformation régle(nt) une trame de l'image volumique est réglée.

**5.** Procédé selon l'une quelconque des revendications 1 à 4, **caractérisé en ce que** la résolution de l'image volumique est limitée par l'application d'une première fonction passe-bande aux premières données spectrales et/ou l'application d'une deuxième fonction passe-bande aux deuxièmes données spectrales.

**6.** Procédé selon l'une quelconque des revendications 1 à 5, **caractérisé en ce que** la direction de balayage (C) se trouve le long de l'axe optique (O2) de l'optique de transport (30).

**7.** Procédé selon l'une quelconque des revendications 1 à 6, **caractérisé en ce que** la direction de balayage (C) se trouve latéralement par rapport à l'axe optique (O2) de l'optique de transport (30).

**8.** Procédé selon l'une quelconque des revendications 1 à 7, **caractérisé en ce que** l'échantillon (12) est éclairé par la feuille de lumière pour produire de la lumière fluorescente.

**9.** Microscope à feuille de lumière (10) permettant de produire une image volumique d'un échantillon (12), comprenant

une optique d'éclairage (20) servant à produire une feuille de lumière qui s'étend le long d'une direction de propagation de lumière (A) et d'une direction d'extension (B) perpendiculaire à celle-ci, dans un espace d'image intermédiaire (14) ;

une optique de transport (30) servant à représenter la feuille de lumière dans l'échantillon (12) et à représenter la lumière de détection provenant de l'échantillon (12) dans l'espace d'image intermédiaire (14) ;

un dispositif de balayage (60) servant à l'éclairage progressif de plusieurs tranches (82) successives le long d'une direction de balayage (C) de l'échantillon (12) avec la feuille de lumière de façon à balayer une zone volumique (80) de l'échantillon (12) qui présente substantiellement la forme d'un parallélépipède qui est défini par la direction de propagation de lumière (A), la direction d'extension (B) et la direction de balayage (C) ;

une optique de détection (50) servant à produire respectivement une image tomographique à partir des images intermédiaires des tranches éclairées (82), l'axe optique (O3) de l'optique de détection (50) étant incliné par rapport à l'axe optique (O2) de l'optique de transport (30) selon un angle d'inclinaison (a) ; et

une unité de traitement d'image (70), dans lequel

l'unité de traitement d'image (70) produit des données d'image volumique qui représentent une pile d'images tomographiques composée des images tomographiques,

les positions relatives des images tomographiques individuelles étant modifiées le long de la direction de propagation de lumière (A), en raison du basculement de l'axe optique (O3) de l'optique de détection (50) par rapport à l'axe optique (O2) de l'optique de transport (30), par rapport aux positions relatives des tranches éclairées (82) correspondantes le long de la direction de propagation de lumière (A) de sorte que la pile d'images tomographiques est cisaillée par rapport à la zone volumique (80) balayée selon l'angle d'inclinaison (α) ; **caractérisé en ce que** l'unité de traitement d'image (70) produit des premières données spectrales par une première transformation bidimensionnelle d'une première partie, non déformée par le cisaillement, des données d'image volumique de la pile d'images tomographiques, la première transformation ayant lieu à des premières coordonnées d'image le long de la direction d'extension (B) et à des deuxièmes coordonnées d'image le long de la direction de balayage (C) dans l'espace de Fourier ;

l'unité de traitement d'image (70) applique une opération de décisaillement à une deuxième partie, déformée par le cisaillement, des données d'image volumique de la pile d'images tomographiques ; et

l'unité de traitement d'image (70) produit l'image volumique dans un espace d'image cible qui est défini par la direction d'extension (B), la direction de balayage (C) et une troisième direction perpendiculaire aux deux dites directions, à partir des premières données spectrales et de la deuxième partie, décisaillée par l'opération de décisaillement, des données d'image volumique.

10. Microscope à feuille de lumière (10) selon la revendication 9, **caractérisé en ce que** l'unité de traitement d'image (70) produit des deuxièmes données spectrales par une deuxième transformation unidimensionnelle de la deuxième partie, décisaillée par l'opération de décisaillement, des données d'image volumique de la pile d'images tomographiques, la deuxième transformation ayant lieu à des troisièmes coordonnées d'image le long de la direction de propagation de lumière (A), et l'unité de traitement d'image (70) produisant l'image volumique dans l'espace d'image cible à partir des premières données spectrales et des deuxièmes données spectrales.

11. Microscope à feuille de lumière (10) selon l'une quelconque des revendications 9 ou 10, **caractérisé par** un seul objectif (32) tourné vers l'échantillon (12).

12. Microscope à feuille de lumière (10) selon l'une quelconque des revendications 9 à 11, **caractérisé en ce que** l'optique d'éclairage (20) comprend au moins une source de lumière (22) et un objectif d'éclairage (24).

13. Microscope à feuille de lumière (10) selon l'une quelconque des revendications 9 à 12, **caractérisé en ce que** l'optique de transport (30) comprend au moins l'objectif (32) tourné vers l'échantillon (12), une première lentille tubulaire (34), une deuxième lentille tubulaire (40) et un objectif de projection (42).

14. Microscope à feuille de lumière (10) selon l'une quelconque des revendications 9 à 13, **caractérisé en ce que** l'optique de détection (50) comprend au moins un objectif de détection (52), une lentille tubulaire (54) et un capteur d'image (56).

15. Microscope à feuille de lumière (10) selon l'une quelconque des revendications 9 à 14, **caractérisé en ce que** le dispositif de balayage (60) comprend au moins un miroir à trame (64) à travers lequel la feuille de lumière peut être déplacée transversalement à l'axe optique (O2) de l'optique de transport (30).

16. Microscope à feuille de lumière (10) selon l'une quelconque des revendications 9 à 14, **caractérisé en ce que** le dispositif de balayage (60) comprend au moins un dispositif de focalisation électronique (62) pour régler un plan de netteté de l'optique de transport (30).

FIG. 1

FIG. 2

FIG. 3

FIG. 4

# FIG. 5

| | |
|---|---|
| Bereitstellen von Schichtbildern | S10 |
| Erzeugen und Speichern von Volumenbilddaten aus den Schichtbildern | S12 |
| Einstellen eines Zielbildraums | S14 |
| Erzeugen von ersten Spektraldaten durch eine zweidimensionale erste Chirp-Z-Transformation | S16 |
| Anwenden einer ersten Bandpassfunktion auf die ersten Spektraldaten | S18 |
| Anwenden einer Entscheroperation | S20 |
| Erzeugen von zweiten Spektraldaten durch eine eindimensionale zweite Chirp-Z-Transformation | S22 |
| Anwenden einer zweiten Bandpassfunktion auf die entscherten zweiten Spektraldaten | S24 |
| Erzeugen eines Volumenbildes in dem Zielbildraum aus den ersten Spektraldaten und den zweiten Spektraldaten durch eine diskrete Fourier-Transformation | S26 |

FIG. 6

FIG. 7

# FIG. 8

# FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8582203 B2
- US 8582203 B
- US 8619237 B2
- WO 2015109323 A2